# EUROPÄISCHE PATENTSCHRIFT

(11) **EP 1 382 879 B1**
(45) Veröffentlichungstag und Bekanntmachung des Hinweises auf die Patenterteilung: **10.06.2009**
(21) Anmeldenummer: 02015845.7
(22) Anmeldetag: 16.07.2002
(51) Int. Cl.: F16D 69/02, C04B 35/573, C04B 35/80

(54) **Verwendung von Reibmaterialien für nassreibende Reibpaarungen**
Use of friction materials for wet friction couples
Utilisation des materiaux de friction pour les garnitures de frottement humide

(43) Veröffentlichungstag der Anmeldung: 21.01.2004
(73) Patentinhaber: SGL Carbon SE, 65203 Wiesbaden (DE)
(72) Erfinder: Benitsch, Bodo, 86647 Buttenwiesen (DE); Grasser, Sebastian, 86316 Friedberg (DE)

(56) Entgegenhaltungen:
- EP-A- 0 835 853
- EP-A- 0 887 572
- EP-A- 0 926 111
- EP-A- 1 188 947

## Beschreibung

Die vorliegende Erfindung betrifft die Verwendung eines Reibmaterials für nassreibende Reibpaarungen , insbesondere einen Reibbelag einer Nassreibungskupplung, enthaltend durch Kohlenstoffaserbündel verstärktes Siliziumkarbid.

Mit Kohlenstoffasern verstärkte Verbundwerkstoffe oder Keramiken mit SiC-haltiger Matrix zeichnen sich durch eine hohe Temperaturbeständigkeit und geringen Verschleiß aus. Deshalb eignen sie sich besonders für Reibbeläge von Kupplungen. Gegenüber den Reibmaterialien auf der Basis von Kohlenstoffasergeweben werden unter vergleichbaren Bedingungen wesentlich höhere Reibwerte erreicht.

Gemäß der gattungsbildenden DE 199 39 545 A1 wird deshalb vorgeschlagen, zur Erhöhung der Verschleißfestigkeit, des Reibwertes und insbesondere der Temperaturbeständigkeit von trockenreibenden Reibungskupplungen, Kupplungs-scheiben mit Reibbelägen aus mit Kohlefasem verstärktem Siliciumcarbid (SiC) zu verwenden.

Bei sogenannten Nasskupplungen wird die bei der Reibung entstehende Wärme durch Kühlflüssigkeit abgeführt, im allgemeinen Öl, welchem der Reibbelag ausgesetzt ist. Dies hat den Vorteil, dass die Wärmebelastung des Reibmaterials gesenkt und die Lebensdauer der Kupplung erhöht wird.

Die Aufgabe der Erfindung besteht demzufolge darin, ein Reibmaterial aus mit Kohlefasern verstärktem Siliciumcarbid (SiC) derart weiterzubilden, dass es zum Einsatz in nassreibenden Reibpaarungen besonders geeignet ist. Weiterhin soll ein kostengünstiges Herstellungsverfahren für das Reibmaterial zur Verfügung gestellt werden.

Diese Aufgabe wird durch die Verwendung eines Reibmaterials gemäß Anspruch 1 gelöst.

Die untereinander in Verbindung stehenden und folglich ein Kanalsystem bildenden Poren ermöglichen einerseits einen Transport der Kühlflüssigkeit, insbesondere des Öls von der Reibfläche ins Innere des Reibmaterials bzw. aus dem Reibmaterial heraus, wodurch Reibungswärme von der hochbelasteten Reibungsfläche entfernt wird. Andererseits verhindern die Poren die Ausbildung eines unerwünschten hydrodynamischen Schmierfils an der Reibfläche, da das Öl bei Kontakt der einander zugeordneten Reibflächen in die Poren gedrängt und sich folglich kein tragender Schmierdruck aufbauen kann.

Durch das im folgenden erläuterte Herstellverfahren des Reibmaterials wird klar, was unter dem Begriff "Makroporen" zu verstehen ist. Gemäß eines ersten Verfahrensschrittes wird ein im wesentlichen flächiges Gebilde aus Gewebe, Gewirke, Gestricke, Gelege oder Geflecht aus Kohlenstoffaserbündeln oder -garnen hergestellt, welches anschliessend mit pyrolytischem Kohlenstoff imprägniert wird. Im folgenden wird das imprägnierte flächige Gebilde zu einem C/C-Körper carbonisiert. Ergebnis ist ein C/C-Körper, welcher Mikroporen im Kohlenstoff und zumeist untereinander in Verbindung stehende Makroporen zwischen den Kohlenstoffaserbündeln aufweist. Die Makroporen sind daher bereits in dem flächigen Gebilde aus Kohlenstoffaserbündeln oder -garnen enthalten und bleiben im wesentlichen während der sich anschliessenden Verfahrensschritte (Imprägnieren, Carbonisieren) erhalten. Demgegenüber ist unter Mikroporen hier eine Porosität von wesentlich geringerer Dimension zu verstehen, indem sie solche Poren umfassen, welche sich im Kohlenstoff nach der Carbonisierung ausbilden oder bereits innerhalb der einzelnen Kohlenstoffasern vorhanden sind.

Abschliessend wird der C/C-Körper zur Ausbildung von Siliziumkarbid (C/C-SiC) mit Silizium infiltriert. Um eine möglichst hohe Steifigkeit und Festigkeit des Körpers zu erzielen, wird beim Stand der Technik eine Menge an Silizium verwendet, die sowohl die Mikroporen im Kohlenstoff wie auch die Makroporen zwischen den Kohlenstoffaserbündeln im wesentlichen vollständig verschliesst.
Bei der Herstellung des Reibmaterials sind die Festigkeits- und Steifigkeitseigenschaften jedoch gegenüber den Reibeigenschaften eher sekundär, da die aus dem Reibmaterial gebildeten Reibkörper zumeist auf Tragkörpern befestigt werden, wie es beispielsweise bei Reibbelägen von Kupplungsscheiben der Fall ist, bei welchen der Reibbelag von einer Stahlscheibe hoher Festigkeit getragen wird.

Die Silizierung des C/C-Körpers wird derart durchgeführt wird, dass sich als Ergebnis ein C/SiC- oder C/C-SiC-Körper ergibt, bei welchem die Mikroporen im wesentlichen vollständig geschlossen sind und dessen Porosität bezogen auf die Makroporen mehr als 8 Vol % beträgt. Dies kann der Fachmann durch eine entsprechende Beschränkung des Siliziumangebots bei der Silizierung erreichen. Zum Vergleich kann etwa ein Ziegelstein herangezogen werden, bei welchem die Mikroporen durch die Poren im gebrannten Tonmaterial und die Makroporen durch die parallel zueinander verlaufenden zylindrischen Kanäle gebildet werden, welche zur Wärmeisolierung vorhanden sind. Wird ein solcher Ziegelstein mit Wasser getränkt, so saugen sich zunächst die Mikroporen voll, während die Kanäle zunächst frei bleiben. Erst wenn der Ziegelstein einer grösseren Wassermenge ausgesetzt ist, stehen auch die Makroporen bildenden Kanäle unter Wasser. Übertragen auf den C/C-Körper bedeutet dies, dass das Siliziumangebot derart beschränkt wird, dass zur Gewährleistung einer für Reibbeläge ausreichenden Steifigkeit und Festigkeit zwar die Mikroporen des C/C-Körpers im wesentlichen vollständig verschlossen werden, aber ein Grossteil der ein Kanalsystem bildenden Makroporen zur Erzielung der eingangs erwähnten Vorteile im Hinblick auf den Wärmetransport und das Reibungsverhalten frei bleibt.

Bevorzugt wird zur Silizium-Infiltration eine Siliziummenge eingesetzt, die in etwa dem stöchiometrischen Äquivalent des freien, das heißt nicht in Faserform vorliegenden Kohlenstoffs des C/C-Körpers entspricht.

Das Einbringen des Siliziums, beziehungsweise die Silizium-Infiltration, in den C/C-Körper kann auf verschiedene Arten erfolgen, beispielsweise durch eine Flüssigsilizierung, eine Gasphaseninfiltration (CVD oder CVI) oder durch andere Verfahren.

Vorzugsweise sieht das Verfahren vor, Gewebe, Gewirke, Geflechte, Gelege oder Gestricke aus Kohlenstoffasern, deren Faserbündel bevorzugt so angeordnet sind, dass sich kanalartige Poren oder Aussparungen im Inneren und/oder an der Oberfläche ergeben, mit pyrolytischem Kohlenstoff, der insbesondere durch Carbonisierung von organischem Material oder der Gasphasenabscheidung von Kohlenstoff erzeugt wird, zu imprägnieren oder nachzuverdichten und den hierdurch erzeugten C/C-Vorkörper mit einer Siliziumschmelze zu infiltrieren, wobei sich zumindest ein Teil des pyrolytischen Kohlenstoffs zu SiC umsetzt.

Vorzugsweise ergibt sich ein mittels Gewebe, Gewirke, Gelege, Gestrick oder sonstigem Faserflächengebilde aus Kohlenstoffasern verstärktes SiC oder SiSiC als Reibbelag einer Nassreibungskupplung. Dieser Werkstoff wird im folgenden auch als C/SiC bezeichnet. Unter C/SiC ist eine Verbundkeramik aus Kohlenstoffverstärkungsfasern und einer überwiegend aus SiC, sowie Minderphasen aus Si und/oder Kohlenstoff aufgebauten Matrix zu verstehen.

Das Reibmaterial wird vorzugsweise als dünne Reibschicht auf einen Tragkörper aufgebracht und wirkt hierbei als Reibbelag. Als Tragkörper können unterschiedliche Metalle Verwendung finden, wobei Messingwerkstoffe oder Stähle bevorzugt sind. Die Verbindung zwischen dem C/SiC-Reibbelag und dem Tragkörper wird in der für C/C-Reibbeläge bekannten Weise durchgeführt, beispielsweise durch Klebung oder Lötung.

Durch geeignete Web-, oder Strickart, oder Geometrie der Faserbündel, Menge und Art der Imprägnierung oder Nachverdichtung des flächigen Gebildes mit pyrolytischem Kohlenstoff oder pyrolisierbaren Si-Polymeren und der Silizierungsparameter ist es möglich, die Porenstruktur und den SiC und/oder Si-Gehalt so einzustellen, dass sich die gewünschten Reibwerte und das gewünschte Nassreibverhalten ergeben.

Das Reibmaterial weist eine Porosität und Porenstruktur auf, die für Flüssigkeiten Fließwege bilden können. Zu den Flüssigkeiten, welche durch die Poren des Reibmaterials transportiert werden zählen insbesondere die in Kupplungen und Getrieben verwendeten Öle, Polyolefine und organische Kühlflüssigkeiten, die unter anderem Polyglykole enthalten.

Bevorzugt liegt die Mehrheit der Poren des Reibbelags als kanalartige Struktur vor, die in der Ebene der Reibfläche verläuft. Diese Struktur führt beim Schliessen des Reibkontaktes zwischen Reibbelag und Gegenkörper in vorteilhafter Weise zu einem schnellen Abtransport des Öls oder der Kühlflüssigkeit weg von der Reibfläche.

Die offene Porosität des Reibmaterials beträgt mehr als 8 Vol% bezogen auf das Volumen des Reibmaterials, vorzugsweise mehr als 12 Vol%. Besonders bevorzugt für die Porosität sind Werte im Bereich von 18 bis 48 Vol%.

Je nach Dicke der Reibschicht verlaufen die Porensysteme oder Kanäle teils innerhalb des Reibmaterials und teils an dessen Reibfläche. In letzterem Fall sind die Kanäle zur Reibfläche hin geöffnet. Bei den als bevorzugt angegebenen Werten der Porosität des Reibmaterials sind die bis zur Reibfläche verlaufenden und dort offenen Porenkanäle, nicht berücksichtigt.

Aufgrund der hohen Porosität weist das Reibmaterial eine deutlich geringere Dichte auf als dies beispielsweise für trockenreibende Reibbeläge aus C/SiC üblich ist. Die Dichten liegen im Bereich von 1,9 bis 2,5 g/cm³.

Das SiC und oder die Mischphasen aus Si und SiC (SiSiC) befindet sich in der für C/SiC-Werkstoffen typischen Weise im Zwischenraum benachbarter Faserbündel, sowie teilweise auch zwischen den einzelnen Fasern.

Gemäß einer vorteilhaften Ausgestaltung der Erfindung ist der überwiegende Teil des SiC und/oder SiSiC in den durch die Faserbündel gebildeten Zwischenräumen angeordnet. Bevorzugt liegt das SiC und/oder SiSiC hierbei im wesentlichen als diskrete Partikel vor, die durch die umgebenden Faserbündel fixiert werden. Das SiC und oder SiSiC bildet hierbei keine dichte und durchgängige Matrix eines C/SiC-Verbundwerkstoffes aus, sondern eine lockere, mit Poren oder Porenkanälen durchsetzte Struktur. Dieser Aufbau trägt zu einem guten Flüssigkeitstransport durch den Reibbelag bei.

In bevorzugter Weise wird die Reibfläche des Reibmaterials im wesentlichen durch Kohlenstoffasern, oder durch zumindest teilweise mit Kohlenstoff beschichtete Kohlenstoffasern gebildet. Das SiC und/oder SiSiC ist im unbelasteten Zustand des Reibmaterials nur in geringer Menge auf der Reibfläche vorhanden. Bei der reibenden Belastung, wenn der Reibmaterial gegen den zugeordneten Gegenkörper gepresst wird, werden die Faserbündel zusammengedrückt, wodurch das in den Faserzwischenräumen befindliche SiC und/oder SiSiC an die Reibfläche hervortritt. In diesem belasteten Zustand übertragen folglich hauptsächlich die SiC und/oder SiSiC-Partikel die Reibkräfte, wodurch hohe und gleichmäßige Reibwerte erreicht werden. Folglich führen insbesondere die innerhalb des Reibmaterials ausgeschiedenen SiC-Partikel zu hohen Reibwerten und einer hohen Verschleissfestigkeit des Reibmaterials.

Der SiC-Gehalt liegt typischerweise oberhalb 12 % (Massenprozent) des Reibmaterials. Bevorzugt werden Reibmaterialien mit SiC-Gehalten von mehr als 20 % und besonders bevorzugt Reibmaterial mit SiC-Gehalten im Bereich von 15 bis 50 % erzeugt. Der Gehalt an freiem Si, das im allgemeinen in einer SiSiC-Phase verteilt vorliegt, liegt bevorzugt unterhalb 20 % (Massenprozent) des Reibmaterials und besonders bevorzugt unterhalb 15 %.

Gemäß einer besonders zu bevorzugenden Ausführung der Erfindung enthält das Reibmaterial nur eine einzige Gewebelage. Das Gewebe wird hierbei durch Stapelfasern gebildet, wobei die Stapelfasern Bündel, Ravings oder Garne sind, die durch Spinnen oder Verzwimen geschnittener Kohlenstoffasern gebildet werden. Bei dieser Ausführung sind Faserbündel oder Fasergarne mit rundem Querschnitt besonders bevorzugt. Das Gewebe ist grobmaschig gestrickt, gewebt oder geflochten.

Die Faserbündel einer Gewebelage sind bevorzugt so gewebt, gestrickt, oder geflochten, dass auf der Oberfläche Berge und Täler von senkrecht aufeinanderstehenden Faserbündeln oder Fasergarnen hintereinander in Reihe abfolgen. Das Gewebe ist so weitmaschig angelegt, dass neben den SiC- oder SiSiC-Ausscheidungen noch genügend Porenvolumen zum Transport der Kühlflüssigkeit oder des Öls verbleiben. Insbesondere führt diese bevorzugte grobmaschige Webart zu einem relativ flexiblen C/SiC-Reibmaterial, das sich auch in der Richtung senkrecht zur Reibfläche komprimieren lässt. Während des Anpressens des Gegenkörpers werden Öl und Kühlflüssigkeit aus der Reibfläche ausgepresst und die Hartstoffe Si und/oder SiC treten in direkten Kontakt mit dem Gegenkörper.

Aufgrund der hohen Härte der SiC-Partikel des Reibmaterials sind als Reibpartner insbesondere harte Metalle oder Keramikwerkstoffe geeignet. Zu den geeigneten Keramiken zählen unter anderem Keramiken auf der Basis von Aluminiumoxid, Zirkonoxid oder SiC. Üblicherweise werden keine vollkeramischen Gegenkörper, sondern mit geeigneten Keramiken beschichtete Metallkörper eingesetzt.
Bevorzugt werden als Reibpartner legierte Stähle eingesetzt.

Ein für Kupplungen typischer Aufbau sieht vor, mehrere mit C/SiC-Reibmaterial beschichtete Stahlscheiben und einfache Stahlscheiben wechselseitig anzuordnen und zu einem Kupplungspaket zu kombinieren. Der Reibbelag weist in dieser Bauform über weite Strecken konstante statische und dynamische Reibkoeffizienten auf.
Eine für Getriebe typische Anwendung sieht mit dem C/SiC-Reibmaterial versehene Synchronringe vor.

Ein weiterer Aspekt betrifft das Verfahren zur Herstellung der mit Kohlenstoffasergewebe verstärkten C/SiC-Reibmaterialien. Dabei wird zur Erzeugung des C/SiC-Verbundmaterials bevorzugt das LSI-Verfahren (Liquid Silicon Infiltration) angewendet. Bestimmender Verfahrensschritt des LSI-Prozesses ist die Flüssiginfiltration eines porösen Kohlenstoffkörpers mit Silizium, wobei zumindest ein Teil des Kohlenstoffs mit dem Silizium zu SiC reagiert, wodurch eine dichte SiC-Keramikmatrix gebildet wird.

Das Verfahren umfasst die folgenden Schritte
a) Herstellung eines flächigen Kohlenstoffasergebildes durch Weben, Stricken, Flechten oder unidirektionales Ablegen von Fasergamen, Faserravings oder Faserbündeln,
b) gegebenenfalls Zusammenfügen mehrerer Lagen dieser Gebildes, insbesondere mit Hilfe der Prepregtechnologie (RTM oder Pressen),
c) Nachverdichtung oder Imprägnierung des flächigen Gebildes mit pyrolytischem Kohlenstoff, wobei der pyrolytische Kohlenstoff aus der Gasphase abgeschieden oder durch die Carbonisierung von organischen Verbindungen gebildet werden kann,
d) Infiltration des porösen C/C-Flächengebildes mit einer Siliziumschmelze, beispielsweise durch LPI (Liquid Polymer Infiltration), durch eine Gasphaseninfiltration (CVD oder CVI) oder durch das LSI-Verfahren (Liquid Silicon Infiltration).

Im ersten Verfahrensschritt werden Kohlenstoffaser-Flächengebilde mit groben oder weiten Maschen bevorzugt. Die Kohlenstoffasern sind dabei bevorzugt in der Weise ausgerichtet, dass sich kanalartige Porensysteme oder Aussparungen ergeben.

Besonders bevorzugt sind bidirektionale oder 2D-Fasergewebe aus Stapelfasern, wobei die Faserbündel, Rovings oder Garne insbesondere einen möglichst runden Querschnitt aufweisen. Das Verhältnis der Breite zur Dicke der gegebenenfalls unrunden Faserbündel oder -garne liegt bevorzugt im Bereich von 0,5 bis 2, wobei die Filamentzahl eines Bündels, Rovings oder Garns typischerweise im Bereich von 1000 bis 12000 Monofilamenten liegt.

Für die meisten Anwendungen sind C/SiC-Reibbeläge ausreichend, die nur eine einzige Kohlenstoffaser-Gewebelage aufweisen. Gegebenenfalls können aber auch mehrere Lagen, zumeist unterschiedlich gewebten Materials in bekannter Weise beispielsweise durch Prepregtechnik miteinander verbunden werden. Bei dieser Vorgehensweise ist vor der Schmelzinfiltration mit Silizium ein Carbonisierungsschritt vorzusehen, bei welchem der organische Binder der Prepregs zu pyrolytischem Kohlenstoff zersetzt wird.

Im nächsten Verfahrensschritt wird das Kohlenstoffaser-Flächengebilde mit pyrolytischem Kohlenstoff nachverdichtet oder imprägniert und ein C/C-Körper gebildet. Unter pyrolytischem Kohlenstoff sind sowohl durch Gasphasenabscheidung (CVD oder CVI), als auch durch thermische Zersetzung kohlenstoffhaltiger Verbindungen, insbesondere organischen Materials, entstehende Kohlenstoffe zu verstehen. Als organisches Material werden bevorzugt Phenolharze oder Peche eingesetzt. Die Imprägnierlösung kann gegebenenfalls auch noch Feststoffe aus Kohlenstoffmaterial, Ruß, oder Graphit enthalten. Das organische Material, beziehungsweise die Imprägnierlösung, wird durch eine Flüssigphasen-Imprägnierung in den Kohlenstoffaserkörper eingebracht und hierauf carbonisiert. Diese Nachverdichtung/Carbonsierung kann gegebenenfalls wiederholt werden. Bevorzugt werden mindestens zwei Flüssigphasen-Nachverdichtungen durchgeführt.

Die thermische Zersetzung der kohlenstoffhaltigen Verbindungen, auch Carbonisierung genannt, erfolgt bei Temperaturen im Bereich von 700 °C bis 1600 °C. Ebenso ist es aber auch möglich, auf Temperaturen bis zu 2400 °C zu erhitzen und dadurch die Graphitierung des Kohlenstoffmaterials einzuleiten.

Der in der Nachverdichtung oder Imprägnierung abgeschiedene Kohlenstoff dient teils als Faserschutz, der die Kohlenstoffasern vor dem Angriff des schmelzflüssigen Siliziums schützt und teils als Reaktionspartner des Siliziums zur Ausbildung der Partikel aus SiC und/oder SiSiC.

In einer besonders bevorzugten Verfahrensvariante wird der pyrolytische Kohlenstoff im wesentlichen nur im Inneren des Flächengebildes abgeschieden, so dass die Oberflächenschicht des Faserkörpers nicht durch einen Kohlenstoffilm bedeckt ist. Hierdurch lässt sich erreichen, dass durch die Silizierung keine durchgehende, oder gar dichte SiC-Schicht ausgebildet wird.
Das Flächengewicht des C/C-Körpers liegt bevorzugt unterhalb 2,2 g/cm³ und besonders bevorzugt im Bereich zwischen 1,5 und 2 g/cm³.

Im letzten Schritt wird der C/C-Körper mit einer Siliziumschmelze infiltriert. Die Siliziumschmelze kann neben Silizium auch weitere Metalle enthalten. Zu diesen zählen insbesondere eine oder mehrere Metalle aus der Gruppe Ti, Cr, Fe, Mo, W, oder Cu. Ein Zusatz von Cu erfolgt bevorzugt dann, wenn die Reibpaarung sehr hohen Anpresskräften ausgesetzt werden soll.

Der Massenanteil an SiC im Reibmaterial liegt nach der Silizierung typischerweise oberhalb 15 %. Das SiC ist dabei bevorzugt ausserhalb der Faserbündel und innerhalb der durch das Kohlenstoffasergewebe gebildeten Porensysteme angeordnet. Bevorzugt sind höchstens 30 Vol% des gesamten im Reibmaterial vorhandenen SiC innerhalb der Kohlenstoffaserbündel-, oder garne angeordnet.

## Patentansprüche

1. Verwendung eines Reibmaterials, welches durch Kohlenstoffaserbündel verstärktes Siliziumkarbid, C/C-SiC oder C/SiC enthält, wobei das Material zwischen den Kohlenstoffaserbündeln und/oder Kohlenstoffasern Poren aufweist, welche zumindest teilweise untereinander in Verbindung stehen und wobei die offene Porosität bezogen auf das Volumen des Reibmaterials mehr als 8 Vol % beträgt und seine Raumdichte im Bereich von 1,9 bis 2,5 g/cm³ liegt, für nassreibende Reibpaarungen.

2. Verwendung nach Anspruch 1, wobei es in wenigerer als 10 mm Dicke eingesetzt wird.

3. Verwendung nach Anspruch 1 oder 2, wobei es mehr als 50 % der Poren in der Ebene der Reibfläche aufweist.

4. Verwendung nach einem der vorhergehenden Ansprüche, wobei das Verhältnis von Breite zur Dicke der Kohlenstoffaserbündel oder Rovings im Bereich von 0,5 bis 2,0 liegt.

5. Verwendung nach einem der vorhergehenden Ansprüche, wobei der Massengehalt an SiC oberhalb 15 % liegt.

6. Verwendung nach einem der vorhergehenden Ansprüche, wobei die Faserbündel einer Gewebelage bevorzugt so gewebt, gestrickt, oder geflochten sind, dass auf der Oberfläche Berge und Täler von senkrecht aufeinanderstehenden Faserbündeln oder Fasergarnen hintereinander in Reihe abfolgen.

7. Verwendung nach einem der vorhergehenden Ansprüche, wobei der Massengehalt an SiC in Zwischenräumen zwischen den Kohlenstoffaserbündeln mehr als 10 % beträgt.

8. Verwendung nach einem oder mehreren der Ansprüche 1 bis 7, wobei das Reibmaterial als Reibkörper auf einem Tragkörper aus Stahl gehalten ist.

9. Verwendung nach einem oder mehreren der Ansprüche 1 bis 8 in nassreibenden Kupplungen oder Getrieben von Kraftfahrzeugen oder für Synchronringe von Getrieben.

## Claims

1. Use of a friction material that contains carbon-fibre-bundle-reinforced silicon carbide, C/C-SiC or C/SiC, wherein between the carbon-fibre bundles and/or carbon fibres the material has pores which communicate with each other at least in part and wherein the open porosity relative to the volume of the friction material amounts to more than 8 % by volume and its bulk density lies in the range of 1.9 to 2.5 g/cm³, for wet-rubbing friction pairings.

2. Use according to claim 1, wherein it is employed in thicknesses of less than 10 mm.

3. Use according to claim 1 or 2, wherein it has more than 50 % of the pores in the plane of the friction area.

4. Use according to one of the preceding claims, wherein the ratio of the width to the thickness of the carbon-fibre bundles or rovings lies in the range of 0.5 to 2.0.

5. Use according to one of the preceding claims, wherein the proportion by mass of SiC lies above 15 %.

6. Use according to one of the preceding claims, wherein the fibre bundles of a fabric layer are preferably woven, knitted or braided in such a way that peaks and troughs of fibre bundles or fibre yarns standing perpendicularly one on top of the other follow one after the other in series on the surface.

7. Use according to one of the preceding claims, wherein the proportion by mass of SiC in interspaces between the carbon-fibre bundles amounts to more than 10 %.

8. Use according to one or more of claims 1 to 7, wherein the friction material is held as a friction body on a carrier body of steel.

9. Use according to one or more of claims 1 to 8 in wet rubbing couplings or gear units of motor vehicles or for synchronizing rings of gear units.

## Revendications

1. Utilisation d'un matériau de friction qui contient du carbure de silicium renforcé par des faisceaux de fibres de carbone, C/C-SiC ou C/SiC, ce matériau ayant des pores, entre les faisceaux de fibres de carbone et/ou les fibres de carbone, qui communiquent au moins en partie entre eux, et
la porosité ouverte rapportée au volume du matériau de friction représente plus de 8 % en volume et sa densité apparente se situe dans une plage comprise entre 1,9 et 2,5 g/cm³ pour des garnitures de friction humides.

2. Utilisation selon la revendication 1,
selon laquelle
on utilise une épaisseur inférieure à 10 mm.

3. Utilisation selon la revendication 1 ou 2,
selon laquelle
il y a plus de 50 % de pores dans le plan des surfaces de friction.

4. Utilisation selon l'une des revendications précédentes,
selon laquelle
le rapport entre la largeur et l'épaisseur des faisceaux de fibres de carbone ou rovings se situe dans une plage comprise entre 0,5 et 2,0.

5. Utilisation selon l'une des revendications précédentes,
selon laquelle
la teneur massique en SiC est supérieure à 15 %.

6. Utilisation selon l'une des revendications précédentes,
selon laquelle
les faisceaux de fibres d'une couche de tissu sont de préférence tissés, tricotés ou tressés et, à la surface, on a une succession de bosses et de creux de faisceaux de fibres et de fils de fibres perpendiculaires entre eux et que se suivent en rangées.

7. Utilisation selon l'une des revendications précédentes,
selon laquelle
la teneur massique en SiC dans les espaces intermédiaires entre les faisceaux de fibres de carbone représente plus de 10 %.

8. Utilisation selon l'une ou plusieurs des revendications 1 à 7,
selon laquelle
le matériau de friction est tenu, comme organe de friction, sur un organe de support en acier.

9. Utilisation selon l'une ou plusieurs des revendications 1 à 8 pour des garnitures de friction humides ou des boîtes de vitesse de véhicules automobiles ou pour des bagues de synchronisation de boîtes de vitesse.
